# EUROPEAN PATENT APPLICATION

(11) **EP 1 424 742 A1**
(43) Date of publication of application: **02.06.2004**
(21) Application number: 01963502.8
(22) Date of filing: 07.09.2001
(51) Int. Cl.: H01M 8/04

(54) **FUEL CELL DEVICE AND POWER GENERATING FACILITY**

(71) Applicant: Mitsubishi Heavy Industries, Ltd., Tokyo 100-8315 (JP)
(72) Inventor: TSUJI, Tadashi, Mitsubishi Heavy Industries Ltd., Takasago-shi, Hyogo 676-8686 (JP)
(74) Representative: Henkel, Feiler & Hänzel
(86) International application number: PCT/JP2001/007768
(87) International publication number: WO 2003/023888

(57) **Abstract**

Using fuel and air introduced for working a power generation portion 20, cooling of the power generation portion 20 is performed in a reaction gas heat exchanger 24. This obviates the necessity for separately introducing air for cooling, and only compressed air necessary for working is introduced. Thus, the power of an air pressure feed source for a fuel cell apparatus is cut down, and a power generation output relative to the amount of air is increased. Consequently, the electric output/efficiency of the fuel cell apparatus and the output/efficiency of power generation equipment are increased.

## Description

### Technical Field

This invention relates to a fuel cell apparatus, and power generation equipment using the fuel cell apparatus.

### Background Art

A fuel cell generates electrical energy with a high electrical efficiency, and also generates thermal energy via a cell body and an exhaust gas. Thus, an even higher electrical efficiency is obtained, if its waste heat is recovered by a topping cycle of a gas turbine (GT) and a bottoming cycle of a steam turbine (ST) or the like to utilize the recovery product for power generation. Hence, a combined cycle power generation plant comprising a fuel cell and a gas turbine in combination is expected to be one having a high effect of saving energy.

In a fuel cell, oxygen necessary for the reaction of an air electrode is supplied by taking in air. Thus, the partial pressure of oxygen needs to be increased. Generally, air taken in from the atmosphere is pressurized by a compressor, and supplied under pressure to the air electrode of the fuel cell. As a drive power source for the compressor, a gas turbine is provided for burning an exhaust gas from the fuel cell to use a combustion gas as aworking fluid. A system has been known in which the compressor is coaxially connected to the gas turbine and driven thereby, or in which an electric generator is driven by the gas turbine to generate an electric power, which operates an electric motor to drive the compressor.

A fuel cell apparatus generates electric energy with a high electrical efficiency, but poses the problem of a fuel cell power generation portion reaching a high temperature, under the influence of the amount of heat of reaction produced by the reaction of fuel and air (oxygen) at an equivalence ratio. Thus, working air supplied to the air electrode is incorporated in a large amount greater than the amount necessary for combustion, whereby a rise in the temperature of the fuel cell power generation portion is suppressed. However, the intake of a large amount of air results in the working of the gas turbine, with plenty of residual oxygen exiting in the exhaust. When the gas turbine is used at a higher gas turbine inlet temperature than the temperature of the fuel cell exhaust, the residual oxygen is consumed by charging of the fuel, but the situation where a considerable concentration of residual oxygen is discharged from the gas turbine remains unchanged. This means that residual oxygen (namely, the amount of air) , which does not contribute to power generation, is superfluously pressurized. Consequently, a great power is required for the compressor, blower, etc., constituting a major factor for decreasing the electrical efficiency of the entire plant.

The present invention has been accomplished in view of the foregoing circumstances. The object of the present invention is to provide a fuel cell apparatus, which can inhibit a fuel cell power generation portion from reaching a high temperature, without supplying a fuel cell with an excess fluid (air) for cooling, and without using a special cooler different from a fluid for combustion; and power generation equipment using the fuel cell apparatus.

### Disclosure of the Invention

A fuel cell apparatus of the present invention is furnished with a fuel cell power generation portion for reacting air and fuel via an electrolyte membrane to generate electric power; a combustion portion for burning an air electrode exhaust gas and a fuel electrode exhaust gas discharged from the fuel cell power generation portion to produce a combustion gas; and cooling means for admitting air, or both air and fuel, for working of the fuel cell power generation portion to cool the fuel cell power generation portion. Thus, there is no need to introduce air for cooling, superfluously and separately, aside from air for combustion. As a result, with power generation equipment having the fuel cell apparatus, it suffices to introduce only compressed air necessary for working. Thus, the power of an air pressure feed source for the fuel cell apparatus is relatively low, and the proportion of a power generation output to the amount of air can be increased. Consequently, the electric output/efficiency of the fuel cell apparatus and the output/efficiency of the entire power generation equipment are increased.

Alternatively, a fuel cell apparatus of the present invention is furnished with a fuel cell power generation portion for reacting air and fuel via an electrolyte membrane to generate electric power; a combustion portion for burning an air electrode exhaust gas and a fuel electrode exhaust gas discharged from the fuel cell power generation portion to produce a combustion gas; a heating portion for heating air, or both air and fuel, for working of the fuel cell power generation portion by exhaust of the fuel cell power generation portion; and cooling means charged with at least one of air and fuel for working of the fuel cell power generation portion to cool the fuel cell power generation portion. Thus, there is no need to introduce air for cooling, superfluously and separately, aside from air for combustion. As a result, with power generation equipment having the fuel cell apparatus, it suffices to introduce only compressed air necessary for working. Thus, the power of an air pressure feed source for the fuel cell apparatus is relatively low, and the proportion of a power generation output to the amount of air can be increased. Consequently, the electric output/efficiency of the fuel cell apparatus and the output/efficiency of the entire power generation equipment are increased. Fuel and air supplied from the gas turbine are supplied to the fuel cell while remaining at low temperatures without being heated at all. At this time, the temperature rise range of air (air and fuel), as a cooling medium, broadens, thus making it very easy to perform a cooling operation for the fuel cell, and enabling a heat exchange portion to have a small area of a heat transfer surface (i.e. to be compact).

Moreover, the fuel cell apparatus of the present invention is characterized in that air and fuel introduced into the cooling means are air and fuel after being heated by the heating portion. Furthermore, the fuel cell apparatus of the present invention is characterized in that air and fuel introduced into the heating portion are air and fuel after cooling the fuel cell power generation portion by the cooling means.

Power generation equipment of the present invention is power generation equipment having the above-described fuel cell apparatus applied thereto, characterized in that the fuel is pressure fed by a pump of equipment of other system. The power generation equipment is also characterized in that the air is pressure fed by air supply means of equipment of other system. The power generation equipment is also characterized in that the air supply means is a compressor. The power generation equipment is also characterized in that the air supply means is a blower. The power generation equipment is also characterized in that the combustion gas produced by the combustion portion is supplied to power generation equipment of other system.

### Brief Description of the Drawings

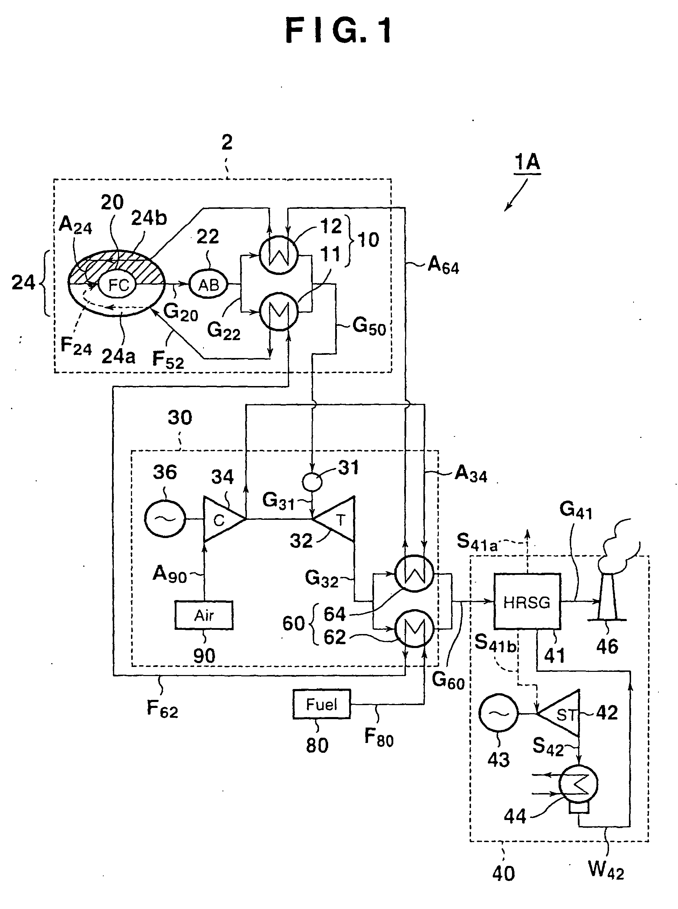

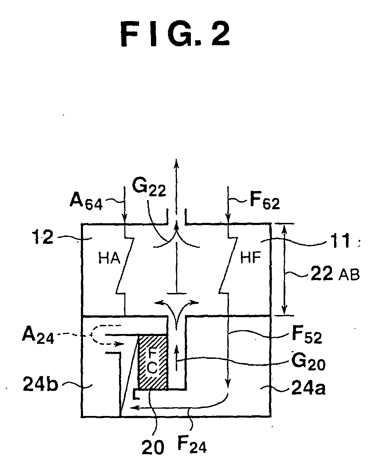

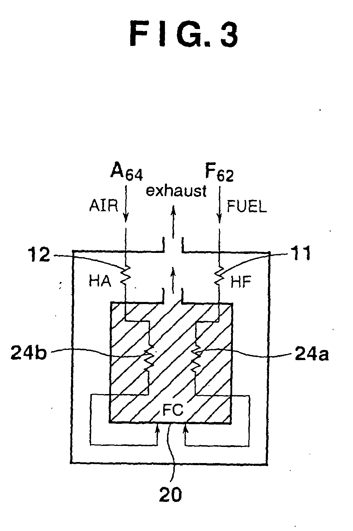

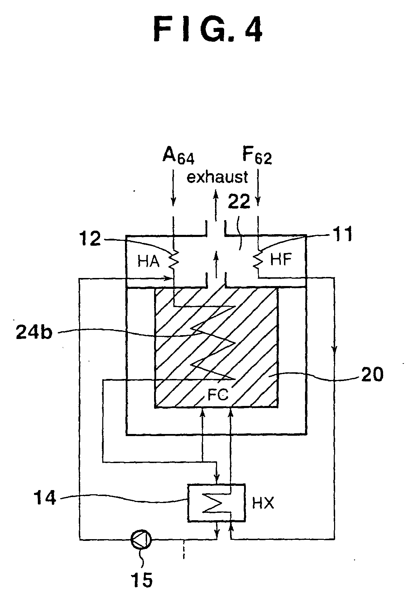

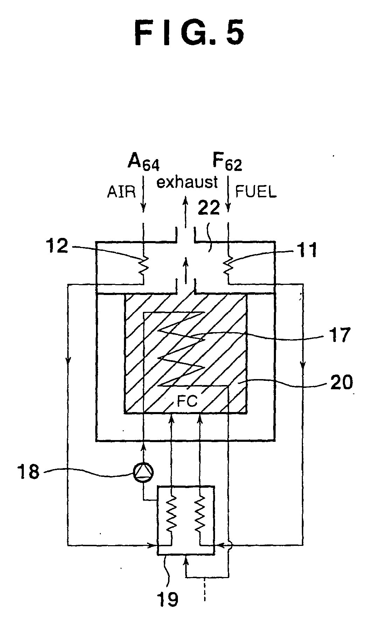

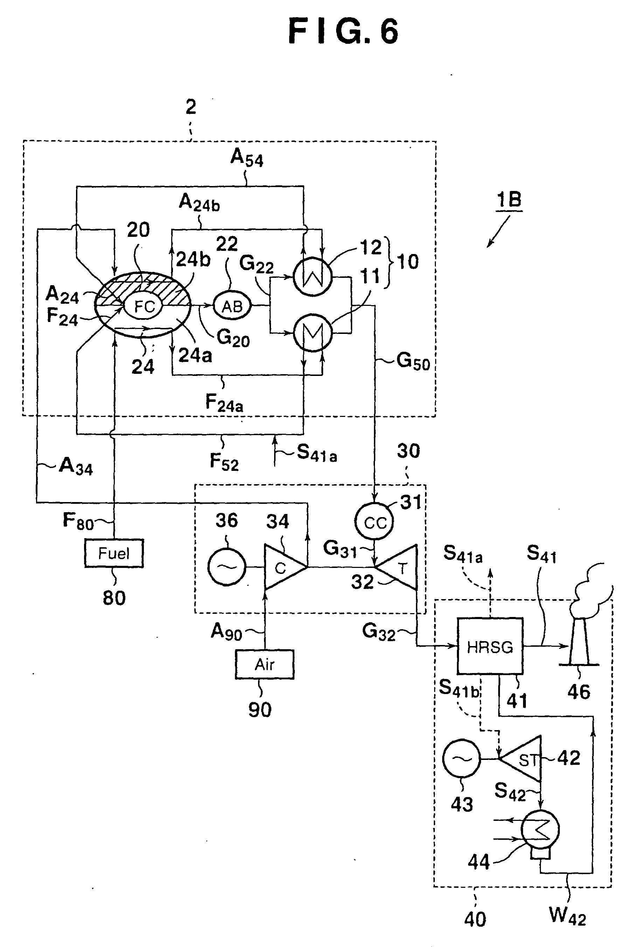

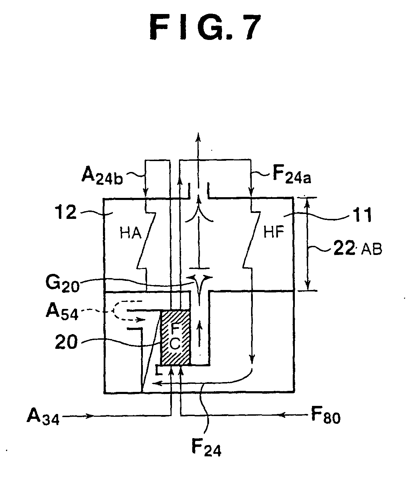

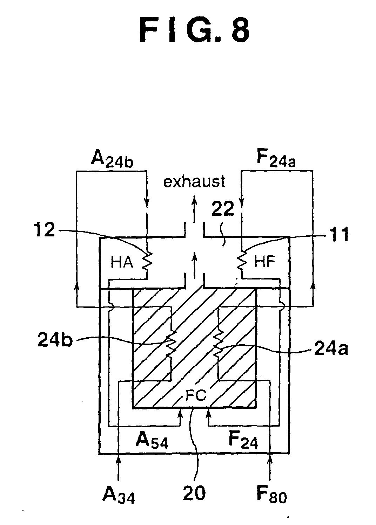

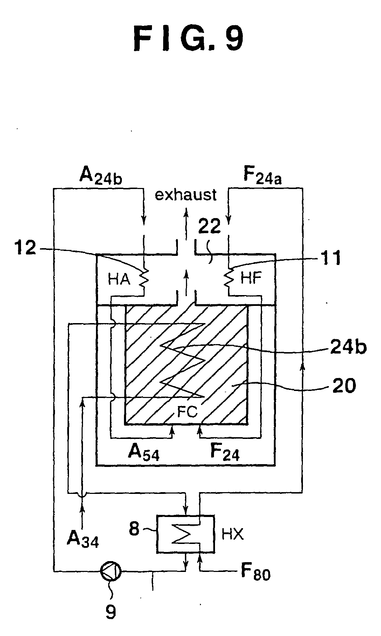

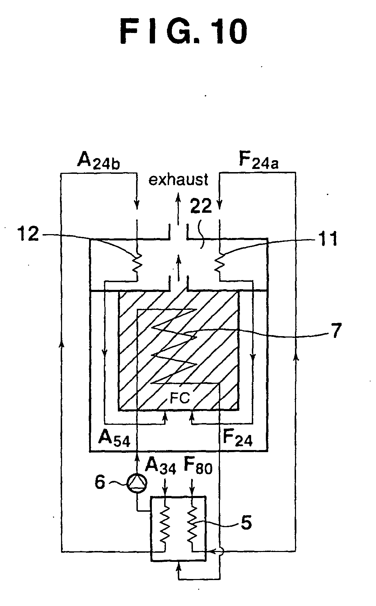

FIG. 1 is a schematic configuration diagram of power generation equipment according to an embodiment of the present invention. FIG. 2 is a schematic configuration diagram of a fuel cell apparatus according to the embodiment of the present invention. FIG. 3 is a circulation system diagram of a cooling fluid. FIG. 4 is a circulation system diagram of a cooling fluid in a fuel cell apparatus according to another embodiment of the present invention. FIG. 5 is a circulation system diagram of a cooling fluid in a fuel cell apparatus according to another embodiment of the present invention. FIG. 6 is a schematic configuration diagram of power generation equipment according to another embodiment of the present invention. FIG. 7 is a schematic configuration diagram of a fuel cell apparatus according to another embodiment of the present invention. FIG. 8 is a circulation system diagram of a cooling fluid. FIG. 9 is a circulation system diagram of a cooling fluid in a fuel cell apparatus according to another embodiment of the present invention. FIG. 10 is a circulation system diagram of a cooling fluid in a fuel cell apparatus according to another embodiment of the present invention.

### Best Mode for Carrying Out the Invention

The present invention will be described in greater detail with reference to the accompanying drawings.

An embodiment of the present invention will be described below based on FIGS. 1 to 3.

As shown in FIG. 1, power generation equipment 1A of the present embodiment is composed of a fuel cell apparatus 2, a gas turbine power generation portion 30, and a waste heat recovery portion 40 for recovering the waste heat of the gas turbine power generation portion 30. The fuel cell apparatus 2 is constructed of a fuel cell power generation portion (power generation portion) 20, a combustion portion 22, and a reaction fluid heater 10. The power generation portion 20 reacts, for example, a natural gas as a fuel, and air as an oxidizing agent via a solid oxide electrolyte membrane to generate electric power, and has an internal reforming (steam reforming) function. The combustion portion 22 burns an unburned part in an exhaust gas G₂₀ of the power generation portion 20 to form a high temperature combustion gas G₂₂. The reaction gas heater 10 is composed of a fuel gas heater 11 and an air heater 12, and the fuel gas heater 11 and the air heater 12 are heated by their heat exchange with the high temperature combustion gas G₂₂ from the combustion portion 22. A reaction gas heat exchange portion 24 as cooling means is provided for the power generation portion 20 and the combustion portion 22.

The reaction gas heat exchange portion 24 is composed of a fuel gas heat exchange portion 24a and an air heat exchange portion 24b. The fuel gas heat exchange portion 24a is designed to heat, in its interior, a natural gas F₂₄, which is supplied to a fuel electrode, to a desired temperature upon recovery of the generated heat of the power generation portion 20, thereby keeping the power generation portion 20 cool at a desired working temperature. The air heat exchange portion 24b is designed to heat, in its interior, air A₂₄, which is supplied to an air electrode, to a desired temperature upon recovery of the generated heat of the power generation portion 20, thereby keeping the power generation portion 20 cool at a desired working temperature.

The GT power generation portion 30, on the other hand, is composed of a gas turbine (GT) 32, an air compressor 34, an electric generator 36, and a heat exchanger 38. The gas turbine 32 recovers power with the use of the combustion gas G₂₂, discharged from the combustion portion 22, as a working fluid. The air compressor 34 is connected to the gas turbine 32 coaxially therewith, and is actuated by the power of the gas turbine 32 to suck air A₉₀ from an air supply portion 90 (which, for example, sucks air from the atmosphere via an air intake chamber) and compress it. The electric generator 36 is connected to the gas turbine 32 coaxially therewith via the air compressor 34, and is actuatedby the power of the gas turbine 32 to generate electric power. The heat exchanger 60 heats a natural gas F₈₀ from a fuel gas supply portion 80, and compressed air A₃₄ₐ from the air compressor 34.

A GT waste heat recovery system 40 is composed of a steam generator (HRSG) 41, a steam turbine (ST) 42, an electric generator 43, a condenser 44, and a chimney 46. The steam generator 41 generates steam by utilizing the heat of an exhaust gas G₆₀ after an exhaust gas G₃₂ discharged from the gas turbine 32 of the GT power generation portion 30 has changed into the exhaust gas G₆₀ after passing through the heat exchanger 60. Part of steam, S₄₁ₐ, is used as internal reforming steam to be mixed with a natural gas, while most of steam, S_{41b}, is supplied to the external steam turbine 42. The steam turbine 42 recovers power by using the steam S_{41b}, supplied from the steam generator 41, as aworking fluid. The electric generator 43 is connected to the steam turbine 42 coaxially, and is actuated by the power of the steam turbine 42 to generate electric power. The condenser 44 condenses exhaust steam S₄₂ from the steam turbine 42, feeding condensate water W₄₂ₐ to the steam generator 41. The compressed air A₃₄ (1) may be the compressor discharge used unchanged; or (2) may be heated by a heat exchanger 64 and used; or may be brought to a predetermined temperature by a combination of (1) and (2) and then used. An exhaust gas G₄₁ after passage through the steam generator 41 is released into the atmosphere from the chimney 46.

The natural gas F₈₀ (about 15°C) supplied from the fuel gas supply portion 80 is introduced into a heat exchanger 62 of the GT power generation portion 30, where it is preheated. A natural gas F₆₂ after passage through the heat exchanger 62 is mixed with the internal reforming steam S₄₁ₐ supplied from the steam generator 41. Alternatively, water may be directly spray-mixed with the natural gas F₆₂ without the use of the internal reforming steam S₄₁ₐ. A natural gas F₅₂, formed by mixing the natural gas F₆₂ with the internal reforming steam S₄₁ₐ and heating the mixture by the heater 11, is introduced into the fuel gas heat exchange portion 24a of the reaction gas heat exchange portion 24. The natural gas F₂₄, after introduction into the fuel gas heat exchange portion 24a, recovers the generated heat of the power generation portion 20, and thus rises to an optimum working temperature (fuel reforming temperature). Because of this heat exchange, the power generation portion 20 is also cooled to and kept at the desired working temperature. The natural gas F₂₄ heated to the optimal working temperature is introduced into the fuel electrode of the power generation portion 20.

The air A₉₀ (for example, 15°C), taken into the GT power generation portion 30 from the air supply portion 90, is compressed by the air compressor 34 and heated thereby. The compressed air A₃₄ is supplied to the heat exchanger 64. Compressed air A₆₄ after passage through the heat exchanger 64 is heated by the heat exchanger 12, and then introduced into the air heat exchange portion 24b of the reaction gas heat exchange portion 24. Compressed air A₂₄ after introduction into the air heat exchange portion 24b recovers heat from the generated heat of the FC power generation portion 20, and is directly heated thereby to a fuel reforming temperature, while the FC power generation portion 20 is also cooled to and kept at a predetermined working temperature. The compressed air A₂₄ heated to the optimal working temperature is introduced to the air electrode of the power generation portion 20.

Within the power generation portion 20, the natural gas-steam mixed gas F₂₄ introduced to the fuel electrode is reacted on the fuel electrode (catalyst) to produce hydrogen. Since this internal reforming reaction is an endothermic reaction (steam reforming of methane), this reaction also absorbs the generated heat of the FC power generation portion 20. Oxygen in the compressed air A₂₄ of the air electrode becomes O²⁻ ions, which pass through the solid electrolyte membrane and migrate, causing a combustion reaction with hydrogen and carbon monoxide of the fuel electrode. After the resulting heat of reaction is converted into electrical energy (direct current electric power), the remaining part occurs as heat. The formation of water or carbon dioxide represents an exothermic reaction, but heat generated thereby is appropriately absorbed by the reaction gas heat exchange portion 24 provided in the FC power generation portion 20, whereby cooling is achieved. Thus, the temperature of the FC power generation portion 20 is kept at the predetermined working temperature.

The fuel electrode exhaust gas and the air electrode exhaust gas after passage through the power generation portion 20 are introduced, as the exhaust gas G₂₀, into the combustion portion 22. In this combustion portion 22, unreacted natural gas components and oxygen remaining in the exhaust gas G₂₀ undergo a combustion reaction easily at a high temperature, turning into the combustion gas G₂₂.

In this combined cycle power generation plant 1A, the air heat exchanger 24b is annexed to the power generation portion 20, so that air is directly heated by the generated heat of the FC power generation portion 20. On the other hand, the FC power generation portion 20 is cooled and kept at the predetermined working temperature. Hence, as compared with a temperature rise of, at most, 100°C according to the earlier technologies, the technology of the present invention involves an air temperature rise range of several hundred degrees centigrade, thus enabling the flow rate of air to be low. That is, the utilization factor of air in cooling is increased. In other words, the FC output with respect to the total output of the plant is increased. The fuel gas heat exchange portion 24a is installed jointly with the above-mentioned air heat exchange portion 24b, so that the fuel gas, in addition to air, also recovers the generated heat of the FC power generation portion 20, and is thereby directly heated. That is, the two fluids, air and fuel, cool the FC power generation portion 20, keeping it in the predetermined working temperature range.

Further, the high temperature exhaust gas G₂₂ discharged from the combustion portion 22 is cooled by heat recovery in the reaction gas heater 10, and is then supplied to the GT power generation portion 30. A predetermined turbine inlet temperature is obtained by a combustor 31. Thus, the higher the temperature of an exhaust gas G₅₀ is, the smaller the amount of fuel charged into the combustor 31 can be made. Consequently, the plant efficiency can be markedly increased in comparison with that of the aforementioned conventional combined cycle power generation plant.

The high temperature exhaust gas G₂₂ discharged from the combustion portion 22 is introduced into the gas turbine 32 of the GT power generation portion 30 to drive the gas turbine 32. By this action, the gas turbine 32 becomes a drive power source to work the air compressor 34 and the electric generator 36 which are coaxially connected to the gas turbine 32. The exhaust gas G₃₂ discharged from the gas turbine 32 passes through the heat exchanger 60, and is then introduced into the steam generator 41. Steam generated by the steam generator 41 is partly used as the internal reforming steam S₄₁ₐ, while the remaining most steam S_{41b} is supplied to the steam turbine 42, as stated earlier.

The steam turbine 42 supplied with the steam S_{41b} becomes a drive power source to actuate the electric generator 43 coaxially connected thereto, generating electric power. The energy of the steam S_{41b} is recovered by the steam turbine 42, whereafter the exhaust steam S₄₂ is discharged and introduced into the condenser 44. The condensate water W₄₂ₐ is fed from the condenser 44 to the steam generator 41. On the other hand, the exhaust gas G₄₁ discharged from the steam generator 41 is released into the atmosphere through the chimney 46.

The configurational outline of the fuel cell apparatus 2 of the power generation equipment 1A shown in FIG. 1, and the circulation status of fuel and air as cooling fluids will be described based on FIGS. 2 and 3.

As shown in the drawings, the natural gas F₆₂ and the compressed air A₆₄ are introduced into the fuel gas heater 11 and the air heater 12 constructed in the combustion portion 22, and thereby brought to predetermined temperatures for cooling the power generation portion 20. Then, these fluids, as the natural gas F₂₄ and compressed air A₂₄ for working of the FC, are charged into the power generation portion 20 while cooling the FC. The exhaust gas G₂₀ of the power generation portion 20 is burned in the combustion portion 22 as the combustion gas G₂₂, and also serves as a heating medium for the fuel gas heater 11 and the air heater 12.

As noted above, cooling of the power generation portion 20 is performed by the natural gas F₆₂ and the compressed air A₆₄ introduced for working of the power generation portion 20, so that air for cooling need not be introduced separately. Thus, it suffices that only compressed air necessary for working is introduced from the compressor 34. As a result, the power of the compressor 34 for the fuel cell apparatus 2 can be reduced, and the compression power can be kept low compared with the amount of power generation. Hence, station service power can be cut down.

Other embodiments of a fuel cell apparatus will be described based on FIGS. 4 and 5.

As shown in FIG. 4, a natural gas F₆₂ and compressed air A₆₄ are introduced into a fuel gas heater 11 and an air heater 12 constructed in a combustion portion 22. The natural gas, which has been heated to a halfway temperature by the fuel gas heater 11, is heated by a fuel gas heater 14 (the fuel gas heater 11 and fuel gas heater 14 of FIG. 4 correspond to the fuel gas heater 11 of FIG. 1), and is then charged into a power generation portion 20 as a natural gas for working. The compressed air upon heat exchange by the air heater 12 cools the power generation portion 20 at an air heat exchange portion 24b (corresponding to the air heater 12 of FIG. 1), and is then charged into the power generation portion 20 as compressed air for working. At the same time, part of the compressed air is heat exchanged by the fuel heater 14, whereby it is cooled, and is then merged into the upstream side of the air heat exchange portion 24b. Compressed air cooled upon heat exchange in the fuel heater 14 is fed to the upstream side of the air heat exchange portion 24b by a blower 15.

The fuel cell apparatus shown in FIG. 4 has the power generation portion 20 cooled, at the air heat exchange portion 24b, only by the compressed air A₆₄ for working. Heating of the natural gas F₆₂ is performed using part of compressed air heated by the power generation portion 20, and the compressed air which has cooled by heating the fuel is recirculated and reheated by the air heat exchange portion 24b. Thus, only the compressed air A₆₄ for working performs cooling of the entire power generation portion 20, and its amount of heating the natural gas F₆₂ is transferred to the natural gas F₆₂ in the fuel heater 14.

As shown in FIG. 5, a natural gas F₆₂ and compressed air A₆₄ are introduced into a fuel gas heater 11 and an air heater 12 constructed in a combustion portion 22. A power generation portion 20 is provided with a cooling portion (heat recovery portion corresponding to the fuel gas heat exchange portion 24a and air heat exchange portion 24b of FIG. 1) 17, and a cooling gas (steam or air) circulating through a heat exchanger 19 under the action of a blower 18 is introduced into the cooling portion 17. The natural gas F₆₂ and compressed air A₆₄ heated to halfway temperatures by the fuel gas heater 11 and the air heater 12 are heat exchanged in the heat exchanger 19, and introduced into the power generation portion 20 as a natural gas and compressed air for working. That is, cooling of the power generation portion 20 is performed by the circulating fluid, which has been heat exchanged by the natural gas and compressed air for working, so that the natural gas and compressed air for working indirectly contribute to cooling.

In the combined cycle power generation plant 1A, the combustion portion 22 is provided outside the reaction gas heat exchange portion 24. Thus, it becomes possible to heat the fuel gas and air to high temperatures in the reaction gas heater 10 by the heat of the combustion gas G₂₂. The GT power generation portion 30 has the combustor 31 provided above the gas line upstream from the gas turbine 32. The combustor 31 is designed to convert the exhaust gas G₅₀, which has been discharged from the reaction gas heater 10, into a high temperature gas at a predetermined temperature before it is introduced into the gas turbine 32. The combustor 31 reheats the exhaust gas G₅₀ which has cooled upon heat exchange in the reaction gas heater 10.

Power generation equipment 1B according to another embodiment of the present invention will be described based on FIGS. 6 to 8. The same constituent members as in the power generation equipment 1A shown in FIGS. 1 to 5 are assigned the same numerals as used in these drawings, and duplicate explanations are omitted.

A natural gas F₈₀ (for example, 15°C) supplied from a fuel gas supply portion 80 is introduced into a fuel gas heat exchange portion 24a of a reaction gas heat exchange portion 24. The natural gas F₈₀ introduced into the fuel gas heat exchange portion 24a is directly heated by generated heat of a power generation portion 20. A natural gas F₂₄ₐ discharged from the fuel gas heat exchange portion 24a is introduced into a fuel gas heater 11 of a reaction gas heater 10, where it is further heated by heat exchange with a combustion gas G₂₂. A natural gas F₅₂ after passage through the fuel gas heater 11 is mixed with internal reforming steam S₄₁ₐ supplied from a steam generator 41. The natural gas F₅₂ mixed with the internal reforming steam S₄₁ₐ is introduced to the fuel electrode of the power generation portion 20. Depending on the temperature conditions of steam, the natural gas mixed with the steam may be the natural gas F₈₀ or the natural gas F₂₄ₐ.

According to the above-described procedure, the natural gas F₉₀ introduced at a low temperature can be heated to an optimal working temperature by utilization of the fuel gas heat exchange portion 24a and the fuel gas heater 11. Thus, when the FC power generation portion 20 is kept at a predetermined working temperature, the power generation portion 20 can be cooled with better efficiency with the use of the fuel at a lower temperature than in the power generation equipment 1A.

Compressed air A₃₄, supplied from an air supply portion 90 by way of an air compressor 34 within a GT power generation portion 30, is introduced into an air heat exchange portion 24b similarly to the above-mentioned natural gas. Then, it is introduced, as compressed air A₅₄, to an air electrode of the power generation portion 20 by way of an air heater 12.

At start-up of the plant, the power generation portion 20 can be heated instantaneously to a predetermined working temperature by effective use of its own waste heat, namely, the heat of the reaction gas heat exchange portion 24. By this operation, stabilization of the FC at start-up of the plant is rendered easy to control, and time taken until a steady working state can be shortened. When the plant is in a steady working state, a large amount of heat is recovered from the power generation portion 20 to the air heat exchange portion 24b and the fuel gas heat exchange portion 24a. Thus, the amounts of heat which should be given to air and the fuel gas by the air heater 12 and the fuel gas heater 11 may be at minimal necessary levels.

Thus, the combustion gas of a combustion portion 22 can be supplied to the GT power generation portion 30 while being kept at as high a temperature as possible, for example, by employing a constitution in which the heat exchanger effectiveness of the reaction gas heater 10 can be changed when the plant reaches a steady working state, or a constitution in which the gas line is designed such that the paths for the fuel gas and air can be switched, or the path for the combustion gas G₂₂ of the combustion portion 22 can be switched. In this case, a combustor 31 of the GT power generation portion 30 may become unnecessary, and these effects can further increase the plant efficiency.

The configurational outline of a fuel cell apparatus 2 of the power generation equipment 1B shown in FIG. 6, and the circulation status of fuel and air as cooling fluids will be described based on FIGS. 7 and 8.

As shown in the drawings, natural gas F₈₀ and compressed air A₃₄ are introduced into the fuel gas heat exchange portion 24a and the air heat exchange portion 24b of the combustion portion 20, thereby cooling the power generation portion 20. Natural gas F₂₄ₐ and compressed air A_{24b} after cooling the power generation portion 20 are introduced into the fuel gas heater 11 and the air heater 12 constructed within the combustion portion 22, and charged into the power generation portion 20 as natural gas F₅₂ and compressed air A₅₄ for working. Exhaust gas G₂₀ of the power generation portion 20 is burned in the combustion portion 22 to become combustion gas G₂₂, serving as a heating medium for the fuel gas heater 11 and the air heater 12.

As described above, the power generation portion 20 is cooled by natural gas F₆₂ and compressed air A₆₄ at low temperatures, which have been introduced for working of the power generation portion 20, and the natural gas F₆₂ and compressed air A₆₄ after performing cooling are heated to predetermined temperatures for working by the fuel gas heater 11 and the air heater 12. Thus, there is no need to separately introduce air for cooling. Hence, it suffices that only air necessary for working of combustion is introduced from a compressor 34. As a result, the power of the compressor 34 for the fuel cell apparatus 2 can be reduced. Moreover, the difference in temperature between the power generation portion 20 and the cooling fluids (natural gas F₆₂ and compressed air A₆₄) can be widened. Consequently, cooling of the power generation portion 20 is facilitated. Moreover, temperature control to predetermined temperatures for working becomes easy.

Other embodiments of the fuel cell apparatus will be described based on FIGS. 9 and 10.

As shown in FIG. 9, a natural gas F₈₀ is heated by a fuel gas heater 8 to become a natural gas F₂₄ₐ, which is fed to a fuel gas heater 11. The natural gas heated by the fuel gas heater 11 is charged into a power generation portion 20 as a natural gas F₂₄ for working. Compressed air A₃₄ cools the power generation portion 20 at an air heat exchange portion 24b, and is then heat exchanged in the fuel gas heater 8, increased in pressure by a blower 9, and fed to an air heater 12. Compressed air A₅₄ heated by the air heater 12 is charged into the power generation portion 20 for the purpose of working.

The fuel cell apparatus shown in FIG. 9 has the power generation portion 20 cooled, at the air heat exchange portion 24b, only by the compressed air A₃₄ for working. Heating of the natural gas F₈₀ is performed using compressed air heated by the power generation portion 20, and the compressed air which has cooled by heating the fuel is recirculated and reheated by the air heater 12 to become the compressed air A₅₄ for working. Thus, only the compressed air A₃₄ for working performs cooling of the power generation portion 20. Since the power generation portion 20 is cooled by the low-temperature compressed air, moreover, the temperature of the compressed air having passed through the fuel gas heater 8 can also be lowered, so that the temperature of compressed air pressurized by the blower 9 can be rendered low. Hence, the power of the blower 9 can be cut down, and the power of the accessories can be minimized.

As shown in FIG. 10, a power generation portion 20 is provided with a cooling portion (corresponding to the fuel gas heat exchange portion 24a and air heat exchange portion 24b of FIG. 6) 7, and a fluid (for example, steam or air) circulating through a heat exchanger 5 under the action of a blower 6 is introduced into the cooling portion 7. A natural gas F₈₀ and compressed air A₃₄ are heat exchanged in the heat exchanger 5, and introduced into a fuel gas heater 11 and an air heater 12 constructed within a combustion portion 22. The natural gas and compressed air heated to predetermined temperatures by the fuel gas heater 11 and the air heater 12 are charged into the power generation portion 20 as a natural gas F₂₄ for working and compressed air A₅₄ for working.

That is, cooling of the power generation portion 20 is performed by the circulating fluid, which has been heat exchanged by the natural gas and compressed air for working, so that the natural gas and compressed air for working indirectly contribute to cooling. In the heat exchanger 5, the natural gas F₈₀ and compressed air A₃₄ at low temperatures are heat exchanged with the circulating fluid, so that the temperature of the circulating fluid itself can be kept low. As a result, the power of the blower 6 can be cut down, and the power of the accessories can be minimized.

The foregoing embodiments present examples in which the fuel cell apparatus 2 is applied to the combined cycle power generation equipment comprising the GT power generation portion 30 and the GT waste heat recovery system 40 in combination. However, the fuel cell apparatus can be applied to other power generation equipment. In this case, fuel is pressure fed by a pump of other equipment, while compressed air is introduced by a compressor (in the case of pressurized equipment) or a blower (in the case of atmospheric pressure equipment) of other equipment. A combustion gas produced by the fuel cell apparatus 2 is recovered by other equipment.

### Industrial Applicability

As described above, there is provided a fuel cell apparatus, which can inhibit a fuel cell power generation portion from reaching a high temperature, without supplying a fuel cell with an excess fluid (air) for cooling, and without using a special cooler different from a fluid for combustion; and power generation equipment using the fuel cell apparatus.

## Claims

1. A fuel cell apparatus comprising:
a fuel cell power generation portion for reacting air and fuel via an electrolyte membrane to generate electric power;
a combustion portion for burning an air electrode exhaust gas and a fuel electrode exhaust gas discharged from said fuel cell power generation portion to produce a combustion gas; and
cooling means for admitting at least one of air and fuel for working of said fuel cell power generation portion to cool said fuel cell power generation portion.

2. A fuel cell apparatus comprising:
a fuel cell power generation portion for reacting air and fuel via an electrolyte membrane to generate electric power;
a combustion portion for burning an air electrode exhaust gas and a fuel electrode exhaust gas discharged from said fuel cell power generation portion to produce a combustion gas;
a heating portion for heating air and fuel for working of said fuel cell power generation portion by exhaust of said fuel cell power generation portion; and
cooling means charged with at least one of air and fuel for working of said fuel cell power generation portion to cool said fuel cell power generation portion.

3. The fuel cell apparatus according to claim 2, **characterized in that** air and fuel introduced into said cooling means are air and fuel after being heated by said heating portion.

4. The fuel cell apparatus according to claim 2, **characterized in that** air and fuel introduced into said heating portion are air and fuel after cooling said fuel cell power generation portion by said cooling means.

5. Power generation equipment having the fuel cell apparatus according to claim 1 or 2 applied thereto, **characterized in that** said fuel is pressure fed by a pump of equipment of other system.

6. Power generation equipment having the fuel cell apparatus according to claim 1 or 2 applied thereto, **characterized in that** said air is pressure fed by air supply means of equipment of other system.

7. The power generation equipment according to claim 6, **characterized in that** said air supply means is a compressor.

8. The power generation equipment according to claim 6, **characterized in that** said air supply means is a blower.

9. Power generation equipment having the fuel cell apparatus according to claim 1 or 2 applied thereto, **characterized in that** the combustion gas produced by said combustion portion is supplied to power generation equipment of other system.

## Amended claims

### Amended claims under Art. 19.1 PCT

**1.** Deleted)

**2.** (Deleted)

**3.** (Deleted)

**4.** (Deleted)

**5.** (Deleted)

**6.** (Deleted)

**7.** (Deleted)

**8.** (Deleted)

**9.** (Deleted)

**10.** (Added) A fuel cell apparatus comprising:
a fuel cell power generation port ion for reacting air and fuel via an electrolyte membrane to generate electric power;
a combustion portion for burning an air electrode exhaust gas and a fuel electrode exhaust gas discharged from said fuel cell power generation portion to produce a combustion gas;
a reaction gas heater (10) for heating air and fuel, for working of said fuel cell power generation portion, by exhaust of said combustion portion; and
a reaction gas heat exchange portion for admitting at least one of air and fuel for working of said fuel cell power generation portion to recover generated heat of said fuel cell power generation portion and cool said fuel cell power generation portion, and
wherein air and fuel introduced into said reaction gas heat exchange portion are air and fuel after being heated by said reaction gas heater (10).

**11.** (Added) A fuel cell apparatus comprising:
a fuel cell power generation portion for reacting air and fuel via an electrolyte membrane to generate electric power;
a combustion portion for burning an air electrode exhaust gas and a fuel electrode exhaust gas discharged from said fuel cell power generation portion to produce a combustion gas;
a reaction gas heater (10) for heating air and fuel, for working of said fuel cell power generation portion, by exhaust of said fuel cell power generation portion; and
a reaction gas heat exchange portion for admitting at least one of air and fuel for working of said fuel cell power generation portion to cool said fuel cell power generation portion, and
wherein air and fuel introduced into said reaction gas heater (10) are air and fuel after cooling said fuel cell power generation portion by said cooling means.

**12.** (Added) A fuel cell apparatus comprising:
a fuel cell power generation portion for reacting air and fuel via an electrolyte membrane to generate electric power;
a combustion portion for burning an air electrode exhaust gas and a fuel electrode exhaust gas discharged from said fuel cell power generation portion to produce a combustion gas; and
a reaction gas heat exchange portion for admitting at least one of air and fuel for working of said fuel cell power generation portion to cool said fuel cell power generation portion, and
wherein said air cools said fuel cell power generation portion at an air heat exchange portion of cooling means, and then part of said air is merged with an upstream side of said air heat exchange portion.

**13.** (Added) The fuel cell apparatus according to claim 12,
further comprising a fuel heater, and
wherein said part of said air is heat exchanged by said fuel heater, and merged with the upstream side of said air heat exchange portion.

**14.** (Added) The fuel cell apparatus according to claim 12,
further comprising a fuel heater, and
wherein said air cools said fuel cell power generation portion at said air heat exchange portion, and is then heat exchanged by said fuel heater.

**15.** (Added) The fuel cell apparatus according to claim 11,
further comprising a fuel gas heater (8), and
wherein said air cools said fuel cell power generation portion at said air heat exchange portion, and is then heat exchanged by said fuel gas heater (8).

**16.** (Added) A fuel cell apparatus comprising:
a fuel cell power generation portion for reacting air and fuel via an electrolyte membrane to generate electric power;
a combustion portion for burning an air electrode exhaust gas and a fuel electrode exhaust gas discharged from said fuel cell power generation portion to produce a combustion gas;
a reaction gas heater (10) for heating air and fuel, for working of said fuel cell power generation portion, by exhaust of said fuel cell power generation portion; and
a cooling portion for recovering generated heat of said fuel cell power generation portion to cool said fuel cell power generation portion, and
wherein cooling of said fuel cell power generation portion at said cooling portion is performed by heat exchange with a circulating fluid which has been heat exchanged with air and fuel for working of said fuel cell power generation portion.

**17.** (Added) Power generation equipment having the fuel cell apparatus according to claim 10 or 11 applied thereto, **characterized in that** said fuel is pressure fed by a pump of equipment of other system.

**18.** (Added) Power generation equipment having the fuel cell apparatus according to claim 10 or 11 applied thereto, **characterized in that** said air is pressure fed by air supply means of equipment of other system.

**19.** (Added) The power generation equipment according to claim 18, **characterized in that** said air supply means is a compressor.

**20.** (Added) The power generation equipment according to claim 18, **characterized in that** said air supply means is a blower.

**21.** (Added) Power generation equipment having the fuel cell apparatus according to claim 10 or 11 applied thereto, **characterized in that** the combustion gas produced by said combustion portion is supplied to power generation equipment of other system.

**22.** (Added) A fuel cell apparatus comprising:
a fuel cell power generation portion for reacting air and fuel via an electrolyte membrane to generate electric power; and
a reaction gas heat exchange portion for admitting at least one of air and fuel before reaction to recover generated heat of said fuel cell power generation portion and cool said fuel cell power generation portion.
